# FASCICULE DE BREVET EUROPEEN

(11) **EP 3 048 743 B1**
(45) Date de publication et mention de la délivrance du brevet: **01.07.2020**
(21) Numéro de dépôt: 15190537.9
(22) Date de dépôt: 20.10.2015
(51) Int. Cl.: H04B 5/00, H02J 7/02, H02J 50/12

(54) **PROCÉDÉ DE GESTION DE LA COMMUNICATION SANS CONTACT ET DE LA CHARGE SANS CONTACT AU SEIN D'UN SYSTÈME, ET SYSTÈME CORRESPONDANT**
VERFAHREN ZUR STEUERUNG DER KONTAKTLOSEN KOMMUNIKATION UND DER KONTAKTLOSEN LADUNG INNERHALB EINES SYSTEMS, UND ENTSPRECHENDES SYSTEM
METHOD FOR MANAGING THE WIRELESS COMMUNICATION AND WIRELESS CHARGING WITHIN A SYSTEM AND CORRESPONDING SYSTEM

(30) Priorité: 26.01.2015 FR 1550566
(43) Date de publication de la demande: 27.07.2016
(73) Titulaire: STMicroelectronics (Rousset) SAS, 13790 Rousset (FR)
(72) Inventeur: RIZZO, Pierre, 13530 TRETS (FR); TORNAMBE, Anthony, 13013 MARSEILLE (FR)
(74) Mandataire: Casalonga

(56) Documents cités:
- WO-A2-2010/035256
- US-A1- 2012 149 301
- RYAN TSENG ET AL: "Introduction to the alliance for wireless power loosely-coupled wireless power transfer system specification version 1.0", 2013 IEEE WIRELESS POWER TRANSFER (WPT), 1 mai 2013 (2013-05-01), pages 79-83, XP055228583, DOI: 10.1109/WPT.2013.6556887 ISBN: 978-1-4673-5009-9

## Description

Des modes de mise en œuvre et de réalisation de l'invention concernent la transmission sans contact d'informations et la charge (ou la recharge) sans contact d'un module d'alimentation, par exemple une batterie.

La communication sans contact ou sans fil s'effectue entre un lecteur et un objet, par exemple un transpondeur du type étiquette (« tag » en langue anglaise), une carte à puce sans contact ou encore un téléphone mobile émulé en mode carte sans que ces exemples ne soient limitatifs.

Le lecteur peut être également par exemple un téléphone mobile émulé en mode lecteur.

La communication champ proche, plus connue par l'homme du métier sous la dénomination anglosaxonne NFC (« Near Field Communication ») est une technologie de connectivité sans fil qui permet une communication sur une courte distance, par exemple 10 cm, entre des dispositifs électroniques, comme par exemple des cartes à puce sans contact ou des téléphones mobiles émulés en mode carte, et des lecteurs.

La technologie NFC est particulièrement adaptée pour connecter tout type de dispositif utilisateur et permet des communications rapides et faciles.

Un objet sans contact est un objet capable d'échanger des informations via une antenne avec un autre objet sans contact, par exemple un lecteur, selon un protocole de communication sans contact.

Un objet NFC, qui est un objet sans contact, est un objet compatible avec la technologie NFC.

La technologie NFC est une plate-forme technologique ouverte normalisée dans la norme ISO/IEC 18092 et ISO/IEC 21481 mais incorpore de nombreuses normes déjà existantes comme par exemple les protocoles type A et type B définis dans la norme ISO-14443 qui peuvent être des protocoles de communication utilisables dans la technologie NFC.

Outre sa fonction classique de téléphone, un téléphone mobile cellulaire peut être utilisé (s'il est équipé de moyens spécifiques) pour échanger des informations avec un autre dispositif sans contact, par exemple un lecteur sans contact, en utilisant un protocole de communication sans contact utilisable dans la technologie NFC.

Ceci permet d'échanger des informations entre le lecteur sans contact et des éléments sécurisés situés dans le téléphone mobile. De nombreuses applications sont ainsi possibles comme la billetterie mobile dans les transports publics (le téléphone mobile se comporte comme un ticket de transport) ou bien le paiement mobile (le téléphone mobile se comporte comme une carte de paiement).

Lors d'une transmission d'information entre un lecteur et un objet émulé en mode étiquette ou carte, le lecteur génère un champ magnétique par l'intermédiaire de son antenne qui est généralement dans les normes classiquement utilisées, une onde à une fréquence de 13,56MHz.

De l'autre côté, l'antenne de l'objet émulant l'étiquette module le champ généré par le lecteur.

Cette modulation est effectuée en modifiant la charge connectée aux bornes de l'antenne de l'objet.

En modifiant la charge aux bornes de l'antenne de l'objet, l'impédance de sortie de l'antenne du lecteur change en raison du couplage magnétique entre les deux antennes. Il en résulte un changement dans les amplitudes et/ou les phases des tensions et courants présents au niveau des antennes du lecteur et de l'objet. Et, de cette façon, les informations à transmettre depuis l'objet vers le lecteur sont transmises par modulation de charge au courant d'antenne du lecteur.

Par ailleurs, la technologie de chargement sans contact permet de transférer sans contact de l'énergie à partir d'une source d'énergie (par exemple un chargeur) vers une charge, par exemple un appareil de communication sans fil, par exemple un téléphone mobile cellulaire, à travers l'espace d'air séparant le chargeur et la charge.

Parmi les différentes normes de chargement sans contact proposées, la norme A4WP (Alliance for Wireless Power) figure parmi l'une des normes choisies par les principaux fabricants de téléphones mobiles cellulaires intelligents (smartphones).

De nombreuses publications existent sur les spécifications du standard A4WP auxquelles l'homme du métier peut se référer à toutes fins utiles. On peut notamment citer l'article de Ryan Tseng et autres intitulé « Introduction to the Alliance for Wireless Power Loosely-Coupled Wireless Power Transfer System Specification Version 1.0 », IEEE Wireless Power Transfer Conférence 2013, Technologies, Systems and Applications, May 15-16 2013, Perugia, Italy.

En bref, l'énergie sans contact est transférée depuis une unité de transmission de puissance (Power Transmitter Unit : PTU) et une unité de réception de puissance (Power Receiving Unit : PRU) qui est contrôlée par un protocole de gestion du chargement. L'énergie sans contact est générée à une fréquence égale à 6,78 MHz.

Selon un mode de mise en œuvre et de réalisation, il est proposé de regrouper au sein d'un même système, de façon simple et compacte, une fonction de communication sans contact, par exemple du type communication NFC, et une fonction de chargement sans contact, par exemple conforme aux spécifications A4WP. Les documents US 2012/149301 A1 et WO 2010/035256 A2 décrivent des systèmes combinant une communication sans contact et une fonction de chargement. L'invention est définie par la revendication indépendante. Des modes de réalisation sont décrits dans les revendications dépendantes. Selon un mode de mise en œuvre et de réalisation, il est proposé de regrouper ces fonctions en s'assurant que le chemin de chargement n'influence pas les performances de la communication sans contact, que les caractéristiques du chargement n'endommagent pas les composants dédiés à la communication sans contact et en s'assurant que les caractéristiques de la communication sans contact n'impactent pas l'efficacité du transfert de puissance.

Ainsi, selon un aspect, il est proposé un procédé de gestion du fonctionnement d'un système, par exemple incorporé au sein d'un appareil de communication sans fil tel qu'un téléphone mobile cellulaire ou une tablette, incorporant une fonction de communication sans contact et une fonction de charge sans contact d'un module d'alimentation, tel qu'une batterie rechargeable.

Selon ce procédé, on effectue la communication sans contact et la charge sans contact de façon sélective via une même antenne.

L'utilisation d'une seule antenne en combinaison avec une activation sélective de la communication sans contact ou de la charge sans contact permet d'obtenir un système présentant un encombrement surfacique réduit.

Par ailleurs, on isole avantageusement de ladite antenne la fonction de communication sans contact lorsque la fonction de charge sans contact est opérationnelle et inversement.

Ainsi, ceci contribue à minimiser l'influence d'une fonction sur l'autre et contribue à ce que la fonction de communication sans contact n'impacte pas l'efficacité du transfert de puissance.

Selon un mode de mise en œuvre, on sélectionne la fonction communication sans contact ou la fonction charge sans contact en configurant de deux façons différentes un circuit d'adaptation connecté aux bornes de ladite antenne, ce qui permet d'effectuer une commutation de fréquence entre la fréquence utilisée pour la communication sans contact et la fréquence utilisée pour le chargement sans contact.

Par ailleurs, la configuration du circuit d'adaptation pour sélectionner la fonction de charge sans contact permet également d'isoler de l'antenne la fonction de communication sans contact.

Ainsi, on utilise un même moyen (le circuit d'adaptation configurable) pour effectuer la commutation de fréquence et pour isoler de l'antenne la fonction de communication sans contact lorsque la fonction de charge sans contact est activée.

Selon un autre mode de mise en œuvre, lorsqu'on sélectionne la fonction de charge sans contact, on rend cette fonction opérationnelle par une configuration d'un bloc de commande connecté entre ladite antenne et le module d'alimentation, et lorsqu'on sélectionne la fonction de communication sans contact, on isole de l'antenne la fonction de charge sans contact par une autre configuration du bloc de commande.

Là encore, ce bloc de commande, comportant par exemple un transistor PMOS commandé sur sa grille par un transistor NMOS, contribue, selon sa configuration (transistor PMOS bloqué ou non) à rendre opérationnelle la fonction de charge sans contact ou bien à isoler cette fonction de charge sans contact de l'antenne lorsque la fonction de communication sans contact est rendue opérationnelle.

Selon un autre aspect, il est proposé un système comprenant une antenne, des moyens de communication configurés pour recevoir et/ou émettre des informations via ladite antenne selon un protocole de communication sans contact, des moyens de chargement configurés pour effectuer un chargement sans contact d'un module d'alimentation via ladite antenne, et des moyens de commande configurés pour rendre sélectivement opérationnels les moyens de communication ou les moyens de chargement.

Selon un mode de réalisation, les moyens de commande sont en outre configurés pour isoler de ladite antenne ceux desdits moyens de communication ou desdits moyens de chargement non rendus opérationnels.

Selon un mode de réalisation, les moyens de communication sont configurés pour recevoir et/ou émettre des informations via ladite antenne à une première fréquence, les moyens de chargement sont configurés pour effectuer un chargement sans contact du module d'alimentation via ladite antenne à une deuxième fréquence et les moyens de commande comprennent un premier bloc de commande configurable apte à la fois à sélectionner les moyens de communication ou les moyens de chargement par une commutation de fréquence entre la première et la deuxième fréquence et à isoler de ladite antenne les moyens de communication lorsque les moyens de chargement sont sélectionnés.

Selon un mode de réalisation, le premier bloc de commande comprend un circuit d'adaptation configurable couplé à ladite antenne possédant
une première configuration dans laquelle il forme avec ladite antenne un premier circuit résonant ayant ladite première fréquence comme fréquence de résonance ou bien il forme un circuit adapté d'impédance compatible avec l'émission/réception d'informations via ladite antenne à ladite première fréquence, et
une deuxième configuration dans laquelle il forme avec ladite antenne un deuxième circuit résonant ayant ladite deuxième fréquence comme fréquence de résonance.

Selon un mode de réalisation, les moyens de communication comportent une interface d'entrée et/ou de sortie, et
dans ladite première configuration, le circuit d'adaptation est connecté entre ladite antenne et ladite interface d'entrée et/ou de sortie, et
dans la deuxième configuration, le circuit d'adaptation est connecté entre ladite antenne et un point froid d'alimentation et ladite interface d'entrée et/ou de sortie est également connectée audit point froid d'alimentation.

Selon un mode de réalisation,
le circuit d'adaptation comporte un premier condensateur connecté en parallèle aux bornes de ladite antenne et plusieurs deuxièmes condensateurs respectivement connectés en série entre les bornes de ladite antenne et ladite interface d'entrée/sortie ;
le premier bloc de commande comporte en outre un premier module commandable de commutation connecté entre l'interface d'entrée/sortie et le point froid d'alimentation et possédant un premier état dans lequel il interdit une connexion effective entre ladite interface d'entrée/sortie et le point froid d'alimentation, le circuit d'adaptation étant alors dans sa première configuration, et un deuxième état dans lequel il connecte effectivement ladite interface d'entrée/sortie audit point froid d'alimentation, le circuit d'adaptation étant alors dans sa deuxième configuration, et
les moyens de commande comportent des premiers moyens de contrôle configurés pour commander sélectivement ledit premier module de commutation.

Selon un mode de réalisation, le premier module de commutation comporte plusieurs transistors MOS respectivement connectés entre lesdits deuxièmes condensateurs et ledit point froid d'alimentation et commandables sur leur grille respective par un premier signal de contrôle délivré par lesdits premiers moyens de contrôle.

Selon un mode de réalisation, les moyens de commande comportent en outre un deuxième bloc de commande commandable et configurable et apte à rendre les moyens de chargement opérationnels lorsque le premier bloc de commande a sélectionné les moyens de chargement et à isoler les moyens de chargement de l'antenne lorsque les moyens de communication sont rendus opérationnels.

Selon un mode de réalisation, le deuxième bloc de commande est connecté entre ladite antenne et le module d'alimentation rechargeable et possède un premier état dans lequel il interdit une connexion effective entre ladite antenne et le module d'alimentation, les moyens de chargement étant alors non opérationnels, et un deuxième état dans lequel il connecte effectivement ladite antenne audit module d'alimentation, les moyens de chargement étant alors rendus opérationnels, et les moyens de commande comportent des deuxièmes moyens de contrôle configurés pour commander sélectivement ledit deuxième bloc de commande.

Selon un mode de réalisation, les moyens de chargement comportent un pont redresseur connecté aux bornes de l'antenne et une unité de gestion d'alimentation connectée entre le pont redresseur et le module d'alimentation rechargeable, et le deuxième bloc de commande est disposé entre le pont redresseur et l'unité de gestion d'alimentation et comporte un transistor PMOS connecté entre une sortie du pont redresseur et l'unité de gestion d'alimentation et commandable sur sa grille de façon à être bloqué dans ledit premier état et passant dans ledit deuxième état.

Selon un mode de réalisation, le deuxième bloc de commande comporte un transistor NMOS connecté entre la grille du transistor PMOS et la masse et commandable par un deuxième signal de contrôle délivré par les deuxièmes moyens de contrôle de façon à rendre bloqué ou passant ledit transistor PMOS.

Selon un mode de réalisation, les premiers moyens de contrôle et les deuxièmes moyens de contrôle sont confondus, le premier module de commutation et le deuxième bloc de commande étant tous les deux soit dans leur premier état soit dans leur deuxième état.

Selon un mode de réalisation, les moyens de communication sont des moyens de communication du type « communication champ proche » et les moyens de chargement sont compatibles avec la technologie de chargement sans contact A4WP.

Selon un autre aspect, il est proposé un appareil, par exemple un téléphone mobile cellulaire, incorporant un système tel que défini ci-avant.

D'autres avantages et caractéristiques de l'invention apparaîtront à l'examen de la description détaillée de modes de mise en œuvre et de réalisation nullement limitatifs, et des dessins annexés, sur lesquels :

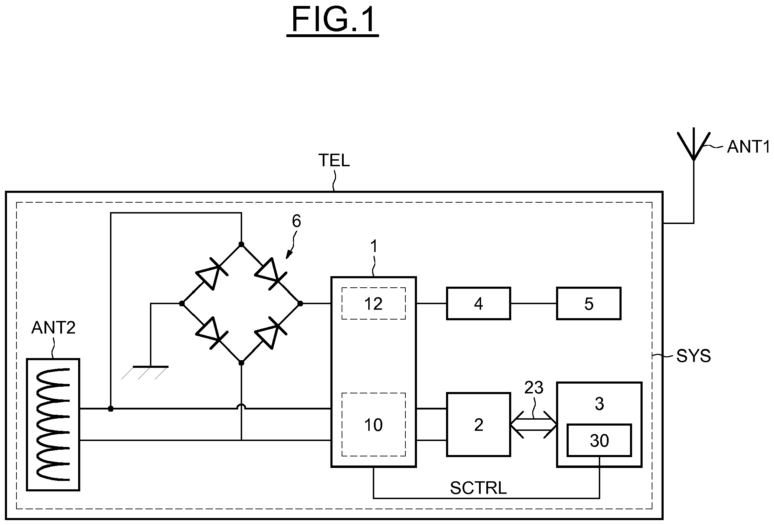

- les figures 1 à 8 illustrent schématiquement des modes de mise en œuvre et de réalisation de l'invention.

Sur la figure 1, la référence TEL désigne ici un appareil de communication, par exemple un téléphone mobile cellulaire, équipé d'une antenne ANT1 pour l'établissement des communications téléphoniques.

Le téléphone TEL comporte également ici un système SYS capable, comme on va le voir en détails ci-après, de réaliser une fonction de communication sans contact avec un dispositif externe ou de chargement sans contact d'un module d'alimentation 5, par exemple une batterie, à travers une même antenne ANT2, ici une antenne inductive.

En d'autres termes, l'antenne ANT2 est utilisable pour la communication sans contact avec le dispositif externe et pour un chargement sans contact de la batterie 5.

Le système SYS comporte des moyens de communication configurés pour recevoir et/ou émettre des informations via ladite antenne ANT2 selon un protocole de communication sans contact. A titre indicatif, les moyens de communication comportent ici un dispositif d'émission/réception ou tête d'émission/réception 2 de structure classique et comportant notamment des moyens de modulation/démodulation de trames, un contrôleur de trame destiné notamment à calculer des bits de parité selon une fonction logique prédéfinie, par exemple celle définie dans la norme ISO 14443.

Les moyens de communication comportent également ici un microcontrôleur hôte 3 connecté au dispositif 2 par un bus 23, ce microcontrôleur hôte étant par exemple un microcontrôleur NFC comportant par exemple une unité centrale classique associée à différentes mémoires.

Les moyens de chargement de la batterie 5 comportent ici un pont redresseur 6 connecté aux deux bornes de l'antenne ANT2 ainsi qu'une unité de gestion d'alimentation 4 (connue par l'homme du métier sous l'acronyme anglosaxon « PMU » : Power Management Unit) connectée entre le pont redresseur 6 et la batterie rechargeable 5.

Le système SYS comporte également des moyens de commande configurés pour rendre sélectivement opérationnels les moyens de communication ou les moyens de chargement.

Par ailleurs, comme on le verra plus en détails ci-après, les moyens de commande en outre configurés pour isoler de l'antenne ANT2 ceux des moyens de communication ou des moyens de chargement qui sont non rendus opérationnels.

Les moyens de commande comportent, comme illustré sur la figure 1, un étage 1 comportant un premier bloc de commande 10 et un deuxième bloc de commande 12, ces deux blocs de commande étant configurables et commandables à l'aide d'un signal de contrôle SCTRL délivré par des moyens de contrôle 30 situés ici dans le microcontrôleur 3 et réalisés par exemple sous forme logicielle. En variante, ces moyens de contrôle pourraient être disposés dans la tête radiofréquence 2.

La tête radiofréquence 2 pourrait également incorporer l'étage 1 ainsi que le pont redresseur 6 dédié à la charge sans contact.

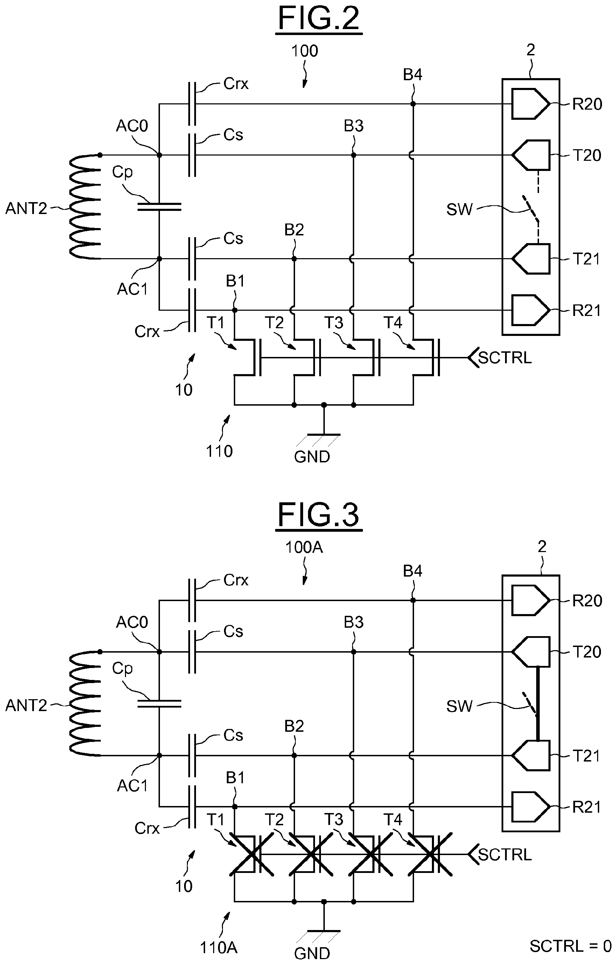

On se réfère maintenant plus particulièrement aux figures 2 à 5 pour illustrer un exemple de réalisation du premier bloc de commande 10 et de ses différentes configurations.

Le premier bloc de commande 10 comprend (figure 2) un circuit d'adaptation configurable 100 couplé aux deux bornes AC0 et AC1 de l'antenne ANT2.

Avant de revenir plus en détails sur la constitution de ce circuit d'adaptation 100, il convient de noter que la tête d'émission/réception 2 comporte une interface d'entrée et/ou de sortie possédant ici deux contacts T20 et T21 utilisables en mode lecteur et deux autres contacts R20 et R21 utilisables en mode lecteur et en mode carte.

A cet égard, la tête 2 est avantageusement, équipée d'un commutateur interne SW permettant de court-circuiter les contacts T20 et T21 pour un fonctionnement en mode carte, ou de ne pas court-circuiter les contacts pour autoriser un fonctionnement en mode lecteur.

Le circuit d'adaptation comporte ici un premier condensateur Cp connecté en parallèle aux bornes AC0 et AC1 de l'antenne ANT2 ainsi qu'aux contacts T20 et T21. Le circuit d'adaptation comporte également des deuxièmes condensateurs Cs et Crx.

Plus précisément, un deuxième condensateur Cs est connecté en série entre la borne AC0 et le contact T20.

Un autre deuxième condensateur Cs est connecté en série entre la borne AC1 et le contact T21.

Deux autres deuxièmes condensateurs Crx sont connectés en série respectivement entre les bornes AC0, AC1 et les contacts R20 et R21.

Le premier bloc de commande 10 comporte également un premier module de commutation 110 commandable par le signal de contrôle SCTRL.

Ce premier bloc de commutation comporte ici quatre transistors NMOS T1-T4 respectivement connectés entre les bornes B1-B4 des condensateurs Cs et Crx et un point froid d'alimentation, ici la masse, GND.

Les grilles de ces transistors NMOS sont commandables par le signal de contrôle SCTRL.

Ce circuit d'adaptation 100 peut prendre différentes configurations comme illustré sur les figures 3 à 5.

Sur la figure 3, on suppose que le commutateur interne SW est fermé, ce qui correspond à une utilisation des moyens de communication en mode carte.

Dans cette configuration, le signal de contrôle SCTRL est à l'état logique 0 correspondant à une sélection de la fonction communication sans contact et à un premier état 110A du premier module de commutation 100.

Les transistors T1 à T4 sont bloqués et le circuit d'adaptation 100 forme alors avec l'antenne ANT2 un circuit résonant 100A. Plus précisément, les condensateurs Cp et Cs forment aux bornes de l'antenne un condensateur équivalent Ct dont la valeur est égale à Cp+Cs/2. A des fins de simplification Ct, Cp et Cs désignent à la fois les condensateurs correspondants et leurs valeurs capacitives.

Dans le cas par exemple d'un protocole de communication de type A ou B défini dans la norme ISO/IEC 14443, les valeurs capacitives Cp et Cs sont choisies de façon à ce que le circuit résonant ait une première fréquence de résonance f égale à 13,56 MHz.

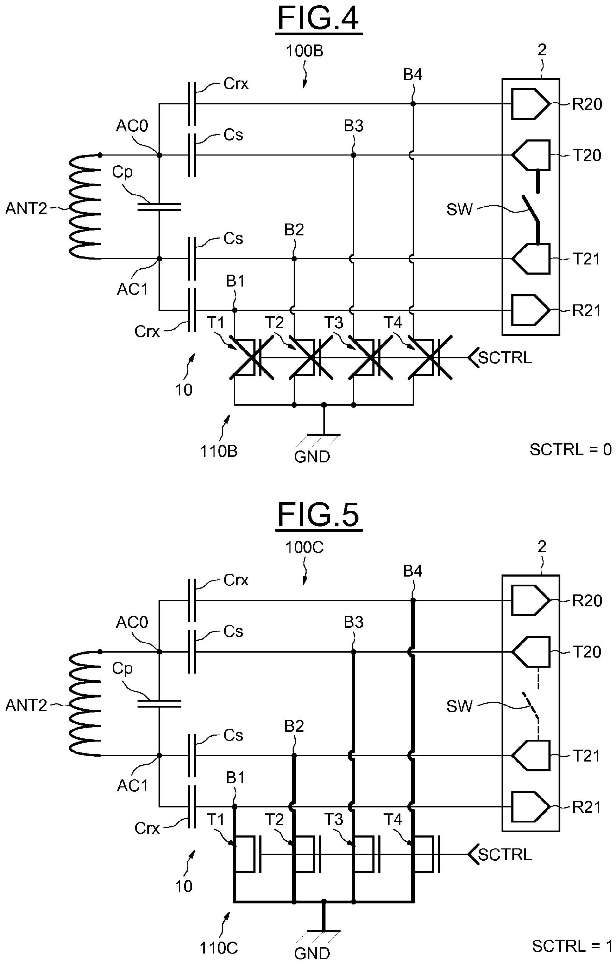

Dans le cas de la figure 4, le premier module de commutation 110 est toujours dans son premier état 110A correspondant à la valeur logique 0 du signal SCTRL. Par contre, dans cet exemple, le commutateur interne SW est ouvert, ce qui correspond à l'utilisation des moyens de communication en mode lecteur.

Dans ce cas, le circuit d'adaptation, dans sa première configuration, forme un circuit adapté d'impédance 100B compatible avec l'émission/réception d'information via l'antenne ANT2 à la première fréquence f.

Dans cette configuration le circuit adapté d'impédance permet d'obtenir une impédance vue des contacts T20 et T21 qui est le conjugué complexe de l'impédance de l'antenne ANT2.

Dans le cas d'un protocole de communication utilisant la première fréquence de 13,56 MHz, lorsque l'on émet sur les contacts T20 et T21 des signaux de tension en opposition de phase en créneau ayant des fronts montants et séparés de 70 ns (correspondant à la fréquence de 13,56 MHz) on reçoit au niveau des contacts R20 et R21, compte tenu de la présence du circuit adapté 100B, de l'antenne ANT2 et d'un filtre EMI (Electromagnetic Interference) connecté entre les contacts T20 et T21 et non représenté sur les figures pour des raisons de simplification, un signal de tension sinusoïdale dont les pics ou valeurs maximales sont également espacés de 70 ns.

Une adaptation en phase parfaite de l'antenne se traduit par un alignement des fronts montants du signal en créneau avec les valeurs maximales respectives du signal sinusoïdal.

On se réfère maintenant à la figure 5 pour décrire une deuxième configuration du circuit d'adaptation 100 correspondant à une valeur logique 1 du signal de contrôle SCTRL c'est-à-dire à une sélection de la fonction de chargement sans contact.

Pour obtenir cette deuxième configuration, le premier bloc de commutation 110 passe dans un deuxième état 110C dans lequel les transistors T1 à T4 sont passants.

De ce fait, les bornes B1 à B4 sont reliées à la masse et le circuit d'adaptation forme aux bornes AC0 et AC1 de l'antenne ANT2 un circuit capacitif ayant une valeur capacitive égale à Ct + Crx/2. Là encore à des fins de simplification, Crx désigne à la fois le condensateur correspondant et sa valeur capacitive.

Ce circuit capacitif forme avec l'antenne ANT2 un circuit résonant et en choisissant une valeur capacitive des condensateurs Crx égale à six fois la valeur Ct, ce circuit résonant va présenter une deuxième fréquence de résonance égale à 6,78 MHz, ce qui est compatible avec un chargement sans contact conforme notamment aux spécifications A4WP.

Par ailleurs, non seulement on a effectué une commutation entre la fréquence de résonance utilisée lors de la communication sans contact et la fréquence de résonance utilisée lors d'un chargement sans contact, mais cette commutation a également permis de tirer les contacts T20, T21, R20 et R21 à la masse, ce qui permet de les protéger et d'isoler la fonction communication sans contact de l'antenne lors d'un chargement sans contact.

A titre indicatif, pour avoir une fréquence de résonance à 13,56 MHz (Mode NFC carte, figure 3), une fréquence de résonnance à 6,78 MHz (mode chargement sans contact, figure 5), et pour avoir une bonne adaptation d'impédance entre les contacts T20, T21 et l'antenne ANT2 (mode NFC lecteur, figure 4), on pourra choisir à titre d'exemple non limitatif pour les condensateurs Cp, Cs et Crx les valeurs capacitives suivantes :
Cp = 76pF, Cs = 32pF, Crx = 552pF pour une antenne ANT2 ayant une valeur inductive de 1,5 µH.

Ces valeurs permettent ainsi d'obtenir une valeur Ct égale à 92pF et une valeur de Crx égale à 6 fois la valeur Ct.

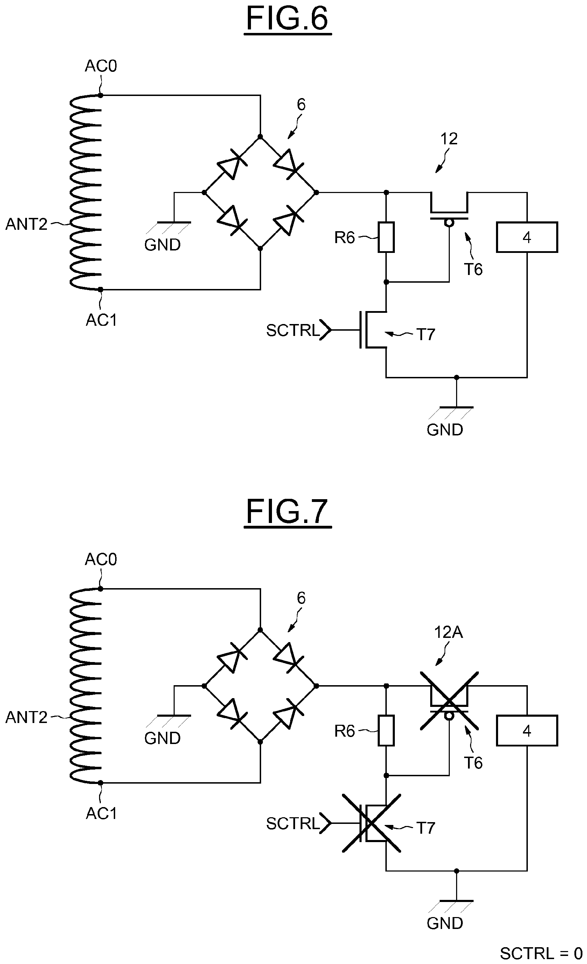

On se réfère maintenant plus particulièrement aux figures 6 à 8 pour décrire plus en détails le deuxième bloc de commande 12 des moyens de commande 1.

Comme illustré sur la figure 6, ce deuxième bloc de commande 12 comporte un transistor PMOS T6 connecté en série entre une sortie du pont redresseur 6 et l'unité de gestion d'alimentation 4. Par ailleurs, une résistance R6 est connectée entre la sortie du pont redresseur et la grille du transistor T6.

Ce deuxième bloc de commande comporte également un transistor NMOS T7 connecté entre la grille du transistor PMOS T6 et la masse GND. Ce transistor NMOS T7 est commandé sur sa grille par le signal de contrôle SCTRL.

Le deuxième bloc de commande est apte à rendre les moyens de chargement opérationnels lorsque le premier bloc de commande 10 a sélectionné les moyens de chargement (SCTRL=1) et à isoler les moyens de chargement de l'antenne ANT2 lorsque les moyens de communication sont rendus opérationnels (SCTRL=0).

A cet égard, comme illustré sur la figure 7 correspondant à une sélection des moyens de communication sans contact (SCTRL=0) le deuxième bloc de commande possède un premier état dans lequel le transistor NMOS T7 est bloqué, ce qui rend par conséquent bloqué le transistor PMOS T6.

Dans ce premier état 12A, les moyens de chargement 4 sont alors non opérationnels puisqu'il n'y a pas de connexion effective entre l'antenne ANT2 et le module d'alimentation (batterie).

Les moyens de chargement sont alors effectivement isolés de l'antenne ANT2 et ne perturbent pas le fonctionnement de la communication sans contact.

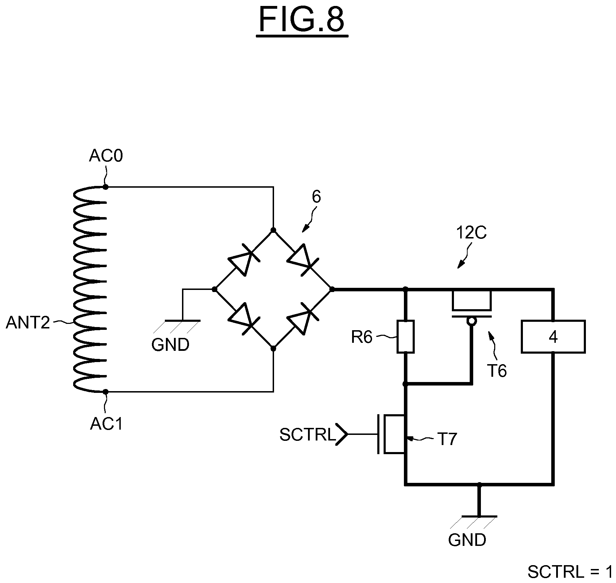

Le deuxième bloc de commande possède également un deuxième état 12C, illustré sur la figure 8, et correspondant à une sélection de la fonction de chargement sans contact (SCTRL=1).

Dans cet état, le transistor NMOS T7 est passant, ce qui rend passant le transistor PMOS T6 et connecte effectivement l'unité de gestion d'alimentation 4 au pont redresseur 6 et par conséquent à l'antenne ANT2. Les moyens de chargement sont alors rendus opérationnels.

## Revendications

1. Système comprenant une antenne (ANT2), des moyens de communication (2, 3) configurés pour recevoir et/ou émettre des informations via ladite antenne selon un protocole de communication sans contact et comportant une interface d'entrée et/ou de sortie (2), des moyens de chargement (6, 4) configurés pour effectuer un chargement sans contact d'un module d'alimentation (5) via ladite antenne (ANT2), et des moyens de commande (1) configurés pour rendre sélectivement opérationnels les moyens de communication ou les moyens de chargement, système dans lequel les moyens de communication (2, 3) sont configurés pour recevoir et/ou émettre des informations via ladite antenne à une première fréquence, les moyens de chargement (6, 4) sont configurés pour effectuer un chargement sans contact du module d'alimentation via ladite antenne à une deuxième fréquence et les moyens de commande (1) comprennent un premier bloc de commande configurable (10) apte à la fois à sélectionner les moyens de communication ou les moyens de chargement par une commutation de fréquence entre la première et la deuxième fréquence et à isoler de ladite antenne les moyens de communication lorsque les moyens de chargement sont sélectionnés, le premier bloc de commande (10) comprenant un circuit d'adaptation configurable (100) couplé à ladite antenne (ANT2) possédant
une première configuration dans laquelle il est connecté entre ladite antenne et ladite interface d'entrée et/ou de sortie et forme avec ladite antenne un premier circuit résonant (100A) ayant ladite première fréquence comme fréquence de résonance ou bien il forme un circuit adapté d'impédance (100B) compatible avec l'émission/réception d'informations via ladite antenne à ladite première fréquence, et
une deuxième configuration dans laquelle il est connecté entre ladite antenne et un point froid d'alimentation (GND), ladite interface d'entrée et/ou de sortie étant également connectée audit point froid d'alimentation (GND), et il forme avec ladite antenne un deuxième circuit résonant (100C) ayant ladite deuxième fréquence comme fréquence de résonance.

2. Système selon la revendication 1, dans lequel les moyens de commande (1) sont en outre configurés pour isoler de ladite antenne ceux desdits moyens de communication ou desdits moyens de chargement non rendus opérationnels.

3. Système selon la revendication 1 ou 2, dans lequel le circuit d'adaptation comporte un premier condensateur (Cp) connecté en parallèle aux bornes de ladite antenne et plusieurs deuxièmes condensateurs (Cs, Crx) respectivement connectés en série entre les bornes de ladite antenne et ladite interface d'entrée/sortie, le premier bloc de commande (10) comporte en outre un premier module commandable de commutation (110) connecté entre l'interface d'entrée/sortie et le point froid d'alimentation et possédant un premier état (110A) dans lequel il interdit une connexion effective entre ladite interface d'entrée/sortie et le point froid d'alimentation, le circuit d'adaptation étant alors dans sa première configuration, et un deuxième état (110C) dans lequel il connecte effectivement ladite interface d'entrée/sortie audit point froid d'alimentation, le circuit d'adaptation étant alors dans sa deuxième configuration, et les moyens de commande comportent des premiers moyens de contrôle (30) configurés pour commander sélectivement ledit module de commutation.

4. Système selon la revendication 3, dans lequel le premier module de commutation (110) comporte plusieurs transistors MOS (T1-T4) respectivement connectés entre lesdits deuxièmes condensateurs et ledit point froid d'alimentation et commandables sur leur grille respective par un premier signal de contrôle (SCTRL) délivré par lesdits premiers moyens de contrôle.

5. Système selon l'une des revendications 1 à 4, dans lequel les moyens de commande comportent en outre un deuxième bloc de commande configurable (12) apte à rendre les moyens de chargement opérationnels lorsque le premier bloc de commande (10) a sélectionné les moyens de chargement et à isoler les moyens de chargement de l'antenne lorsque les moyens de communication sont rendus opérationnels.

6. Système selon la revendication 5, dans lequel le deuxième bloc de commande (12) est connecté entre ladite antenne (ANT2) et le module d'alimentation (5) et possède un premier état (12A) dans lequel il interdit une connexion effective entre ladite antenne et le module d'alimentation, les moyens de chargement étant alors non opérationnels, et un deuxième état (12C) dans lequel il connecte effectivement ladite antenne audit module d'alimentation, les moyens de chargement étant alors rendus opérationnels, et les moyens de commande comportent des deuxièmes moyens de contrôle (30) configurés pour commander sélectivement ledit deuxième module de commutation.

7. Système selon la revendication 6, dans lequel les moyens de chargement comportent un pont redresseur (6) connecté aux bornes de l'antenne et une unité de gestion d'alimentation (4) connectée entre le pont redresseur et le module d'alimentation rechargeable, et le deuxième bloc de commande (12) est disposé entre le pont redresseur (6) et l'unité de gestion d'alimentation (4) et comporte un transistor PMOS (T6) connecté entre une sortie du pont redresseur et l'unité de gestion d'alimentation et commandable sur sa grille de façon à être bloqué dans ledit premier état et passant dans ledit deuxième état.

8. Système selon la revendication 7, dans lequel le deuxième bloc de commande (12) comporte un transistor NMOS (T7) connecté entre la grille du transistor PMOS (T6) et la masse et commandable par un deuxième signal de contrôle (SCTRL) délivré par les deuxièmes moyens de contrôle (30) de façon à rendre bloqué ou passant ledit transistor PMOS.

9. Système selon l'une des revendications 3 ou 4 prise en combinaison avec l'une des revendications 6 à 8, dans lequel les premiers moyens de contrôle (30) et les deuxièmes moyens de contrôle (30) sont confondus, le premier module de commutation et le deuxième bloc de commande étant tous les deux soit dans leur premier état soit dans leur deuxième état.

10. Système selon l'une des revendications 1 à 9, dans lequel les moyens de communication sont des moyens de communication du type « communication champ proche » et les moyens de chargement sont compatible avec la norme de chargement sans contact A4WP.

11. Appareil, par exemple un téléphone mobile cellulaire, incorporant un système selon l'une des revendications 1 à 10.

## Patentansprüche

1. System, das eine Antenne (ANT2), Kommunikationseinrichtungen (2, 3), die dazu ausgestaltet sind, über die Antenne Informationen gemäß einem Kontaktlos-Kommunikationsprotokoll zu empfangen und/oder zu senden, und die eine Eingangs- und/oder Ausgangsschnittstelle (2) beinhalten, Ladeeinrichtungen (6, 4), die dazu ausgestaltet sind, ein kontaktloses Aufladen eines Speisemoduls (5) über die Antenne (ANT2) durchzuführen, und Steuerungseinrichtungen (1), die dazu ausgestaltet sind, die Kommunikationseinrichtungen oder die Ladeeinrichtungen selektiv betriebsbereit zu machen, umfasst, wobei bei dem System die Kommunikationseinrichtungen (2, 3) dazu ausgestaltet sind, über die Antenne Informationen mit einer ersten Frequenz zu empfangen und/oder zu senden, die Ladeeinrichtungen (6, 4) dazu ausgestaltet sind, ein kontaktloses Laden des Speisemoduls über die Antenne mit einer zweiten Frequenz durchzuführen, und die Steuerungseinrichtungen (1) einen ersten konfigurierbaren Steuerungsblock (10) umfassen, der zugleich geeignet ist, die Kommunikationseinrichtungen oder die Ladeeinrichtungen durch eine Frequenzumschaltung zwischen der ersten und der zweiten Frequenz zu wählen und die Kommunikationseinrichtungen von der Antenne zu trennen, wenn die Ladeeinrichtungen gewählt sind, wobei der erste Steuerungsblock (10) eine mit der Antenne (ANT2) gekoppelte konfigurierbare Anpassungsschaltung (100) umfasst, besitzend
eine erste Konfiguration, in der sie zwischen die Antenne und die Eingangs- und/oder Ausgangsschnittstelle geschaltet ist und mit der Antenne einen ersten Resonanzkreis (100A) bildet, der die erste Frequenz als Resonanzfrequenz hat, oder aber einen angepassten Impedanzkreis (100B) bildet, der mit dem Senden/Empfangen von Informationen über die Antenne mit der ersten Frequenz kompatibel ist, und
eine zweite Konfiguration, in der sie zwischen die Antenne und einen kalten Speisepunkt (GND) geschaltet ist, wobei die Eingangs- und/oder Ausgangsschnittstelle ebenfalls an den kalten Speisepunkt (GND) geschaltet ist, und sie mit der Antenne einen zweiten Resonanzkreis (100C) bildet, der die zweite Frequenz als Resonanzfrequenz hat.

2. System nach Anspruch 1, bei dem die Steuerungseinrichtungen (1) ferner dazu ausgestaltet sind, von der Antenne diejenigen der Kommunikationseinrichtungen oder der Ladeeinrichtungen zu trennen, die nicht betriebsbereit gemacht wurden.

3. System nach Anspruch 1 oder 2, bei dem die Anpassungsschaltung einen ersten Kondensator (Cp), der parallel zu den Klemmen der Antenne geschaltet ist, und mehrere zweite Kondensatoren (Cs, Crx), die jeweils in Reihe zwischen die Klemmen der Antenne und die erste Eingangs-/Ausgangsschnittstelle geschaltet sind, beinhaltet, der erste Steuerungsblock (10) ferner ein erstes steuerbares Umschaltmodul (110) beinhaltet, das zwischen die Eingangs-/Ausgangsschnittstelle und den kalten Speisepunkt geschaltet ist und einen ersten Zustand (110A) besitzt, in dem es eine wirksame Verbindung zwischen der Eingangs-/Ausgangsschnittstelle und dem kalten Speisepunkt unterbindet, wobei die Anpassungsschaltung dann in ihrer ersten Konfiguration ist, und einen zweiten Zustand (110C), in dem es die Eingangs-/Ausgangsschnittstelle wirksam mit dem kalten Speisepunkt verbindet, wobei die Anpassungsschaltung dann in ihrer zweiten Konfiguration ist, und die Steuerungseinrichtungen erste Kontrolleinrichtungen (30) beinhalten, die dazu ausgestaltet sind, das Umschaltmodul selektiv zu steuern.

4. System nach Anspruch 3, bei dem das erste Umschaltmodul (110) mehrere MOS-Transistoren (T1-T4) beinhaltet, die jeweils zwischen die zweiten Kondensatoren und den kalten Speisepunkt geschaltet sind und über ihr jeweiliges Gate durch ein erstes Kontrollsignal (SCTRL) steuerbar sind, das von den ersten Kontrolleinrichtungen abgegeben wird.

5. System nach einem der Ansprüche 1 bis 4, bei dem die Steuerungseinrichtungen ferner einen zweiten konfigurierbaren Steuerungsblock (12) beinhalten, der geeignet ist, die Ladeeinrichtungen betriebsbereit zu machen, wenn der erste Steuerungsblock (10) die Ladeeinrichtungen gewählt hat, und die Ladeeinrichtungen von der Antenne zu trennen, wenn die Kommunikationseinrichtungen betriebsbereit gemacht wurden.

6. System nach Anspruch 5, bei dem der zweite Steuerungsblock (12) zwischen die Antenne (ANT2) und das Speisemodul (5) geschaltet ist und einen ersten Zustand (12A) besitzt, in dem er eine wirksame Verbindung zwischen der Antenne und dem Speisemodul unterbindet, wobei die Ladeeinrichtungen dann nicht betriebsbereit sind, und einen zweiten Zustand (12C), in dem er die Antenne wirksam mit dem Speisemodul verbindet, wobei die Ladeeinrichtungen dann betriebsbereit gemacht wurden, und die Steuerungseinrichtungen zweite Kontrolleinrichtungen (30) beinhalten, die dazu ausgestaltet sind, das zweite Umschaltmodul selektiv zu steuern.

7. System nach Anspruch 6, bei dem die Ladeeinrichtungen eine Gleichrichterbrücke (6) beinhalten, die zwischen die Klemmen der Antenne geschaltet ist, und eine Speiseverwaltungseinheit (4), die zwischen die Gleichrichterbrücke und das wiederaufladbare Speisemodul geschaltet ist, und der zweite Steuerungsblock (12) zwischen der Gleichrichterbrücke (6) und der Speiseverwaltungseinheit (4) angeordnet ist und einen PMOS-Transistor (T6) beinhaltet, der zwischen einen Ausgang der Gleichrichterbrücke und die Speiseverwaltungseinheit geschaltet ist und über sein Gate so steuerbar ist, dass er in dem ersten Zustand gesperrt ist und in dem zweiten Zustand leitet.

8. System nach Anspruch 7, bei dem der zweite Steuerungsblock (12) einen NMOS-Transistor (T7) beinhaltet, der zwischen das Gate des PMOS-Transistors (T6) und die Masse geschaltet ist und durch ein zweites Kontrollsignal (SCTRL) steuerbar ist, das von den zweiten Kontrolleinrichtungen (30) abgegeben wird, so dass der PMOS-Transistor sperrend oder leitend gemacht wird.

9. System nach einem der Ansprüche 3 und 4 in Kombination mit einem der Ansprüche 6 bis 8, bei dem die ersten Kontrolleinrichtungen (30) und die zweiten Kontrolleinrichtungen (30) identisch sind, wobei das erste Umschaltmodul und der zweite Steuerungsblock beide entweder in ihrem ersten Zustand oder in ihrem zweiten Zustand sind.

10. System nach einem der Ansprüche 1 bis 9, bei dem die Kommunikationseinrichtungen Kommunikationseinrichtungen vom Typ "Nahfeldkommunikation" sind und die Lademittel mit der Kontaktlos-Ladenorm A4WP kompatibel sind.

11. Gerät, beispielsweise ein Mobiltelefon, mit einem System nach einem der Ansprüche 1 bis 10.

## Claims

1. System comprising an antenna (ANT2), communication means (2, 3) configured for receiving and/or transmitting information via the said antenna according to a contactless communications protocol comprising an input and output interface (2), charging means (6, 4) configured for carrying out a contactless charging of a power supply module (5) via the said antenna (ANT2), and control means (1) configured for selectively rendering the communication means or the charging means operational, in which system the communication means (2, 3) are configured for receiving and/or transmitting information via the said antenna at a first frequency, the charging means (6, 4) are configured for carrying out a contactless charging of the power supply module via the said antenna at a second frequency and the control means (1) comprise a first configurable control block (10) designed to both select the communication means or the charging means by a frequency switching between the first and the second frequency and to isolate the communication means from the said antenna when the charging means are selected, the first control block (10) comprising a configurable matching circuit (100) coupled to the said antenna (ANT2) having
a first configuration in which it is connected between the said antenna and the said input and output interface and forms with the said antenna a first resonant circuit (100A) having the said first frequency as resonance frequency or else it forms a matched circuit with an impedance (100B) compatible with the transmission/reception of information via the said antenna at the said first frequency, and
a second configuration in which it is connected between the said antenna and a power supply cold point (GND), the said input and output interface being also connected to the said power supply cold point (GND), and it forms a second resonant circuit (100C) with the said antenna having the said second frequency as resonance frequency.

2. System according to Claim 1, in which the control means (1) are furthermore configured for isolating from the said antenna those of the said communication means or of the said charging means not rendered operational.

3. System according to either of Claims 1 and 2, in which the matching circuit comprises a first capacitor (Cp) connected in parallel with the terminals of the said antenna and several second capacitors (Cs, Crx) respectively connected in series between the terminals of the said antenna and the said input/output interface, the first control block (10) furthermore comprises a first controllable switching module (110) connected between the input/output interface and the power supply cold point and having a first state (110A) in which an effective connection between the said input/output interface and the power supply cold point is forbidden, the matching circuit then being in its first configuration, and a second state (110C) in which it effectively connects the said input/output interface to the said power supply cold point, the matching circuit then being in its second configuration, and the control means comprise first control means (30) configured for selectively controlling the said switching module.

4. System according to Claim 3, in which the first switching module (110) comprises several transistors MOS (T1-T4) respectively connected between the said second capacitors and the said power supply cold point and controllable on their respective grid by a first control signal (SCTRL) delivered by the said first control means.

5. System according to one of Claims 1 to 4, in which the control means furthermore comprise a second configurable control block (12) designed to render the charging means operational when the first control block (10) has selected the charging means and to isolate the charging means from the antenna when the communication means are rendered operational.

6. System according to Claim 5, in which the second control block (12) is connected between the said antenna (ANT2) and the power supply module (5) and has a first state (12A) in which an effective connection between the said antenna and the power supply module is forbidden, the charging means then being non-operational, and a second state (12C) in which it effectively connects the said antenna to the said power supply module, the charging means then being rendered operational, and the control means comprise second control means (30) configured for selectively controlling the said second switching module.

7. System according to Claim 6, in which the charging means comprise a rectifier bridge (6) connected to the terminals of the antenna and a power supply management unit (4) connected between the rectifier bridge and the rechargeable power supply module, and the second control block (12) is disposed between the rectifier bridge (6) and the power supply management unit (4) and comprises a PMOS transistor (T6) connected between an output of the rectifier bridge and the power supply management unit and controllable on its grid in such a manner as to be turned off in the said first state and conducting in the said second state.

8. System according to Claim 7, in which the second control block (12) comprises a NMOS transistor (T7) connected between the grid of the PMOS transistor (T6) and ground and controllable by a second control signal (SCTRL) delivered by the second control means (30) so as to turn the said PMOS transistor off or on.

9. System according to either of Claims 3 and 4 taken in combination with one of Claims 6 to 8, in which the first control means (30) and the second control means (30) are one and the same, the first switching module and the second control block both being in their first state or in their second state.

10. System according to one of Claims 1 to 9, in which the communication means are communication means of the type "near field communications" and the charging means are compatible with the contactless charging standard A4WP.

11. Device, for example a cellular mobile telephone, incorporating a system according to one of Claims 1 to 10.
